# EUROPEAN PATENT APPLICATION

(11) **EP 4 523 997 A1**
(43) Date of publication of application: **19.03.2025**
(21) Application number: 23196901.5
(22) Date of filing: 12.09.2023
(51) Int. Cl.: B62D 9/00

(54) **METHOD FOR CONTROLLING A VEHICLE, DATA PROCESSING APPARATUS, COMPUTER PROGRAM, AND COMPUTER-READABLE STORAGE MEDIUM**

(71) Applicant: Volvo Car Corporation, 405 31 Göteborg (SE)
(72) Inventor: YANG, Derong, 40531 Göteborg (SE); JONASSON, Mats, 40531 Göteborg (SE)
(74) Representative: Maiwald GmbH

(57) **Abstract**

The disclosure relates to a method for controlling a vehicle (10) having at least a first steerable and driven wheel (12) and a second steerable and driven wheel (14). The first wheel (12) and the second wheel (14) are associated with the same axle. The method comprises receiving first data (D1) and second data (D2), the first data (D1) and the second data (D2) are indicative of different characteristics of a driver input requesting the vehicle (10) to turn. The method further comprises comparing the first data (D1) to a first threshold (L1) and the second data (D2) to a second threshold (L2). Moreover, the method comprises causing a first torque (T1) to be applied to or withdrawn from the first wheel (12) and a second torque (T2) to be applied to or withdrawn from the second wheel (14) based on the comparison of the first data (D1) to the first threshold (L1) and on the comparison of the second data (D2) to the second threshold (L2). The first torque (T1) and the second torque (T2) have different absolute values and/or different orientations. Furthermore, a data processing apparatus (32), a computer program (44), and a computer-readable storage medium (42) are shown.

## Description

### TECHNICAL FIELD

The present disclosure relates to a method for controlling a vehicle having at least a first steerable and driven wheel and a second steerable and driven wheel. The first wheel and the second wheel are associated with the same axle.

The present disclosure also relates to a data processing apparatus, a computer program, and a computer-readable storage medium.

### BACKGROUND ART

In this context, it is known that steerable wheels allow a driver of a vehicle to control a direction into which the vehicle is moving. If the driver is a human driver, the driver may adjust an orientation of the steerable wheels by manipulating a steering wheel inside the vehicle. If the driver is an autonomous driver, the autonomous driving system may adjust an orientation of the steerable wheels automatically.

Independent of the fact whether the driver is human or autonomous, each vehicle may be characterized by a minimal turning radius. The minimal turning radius characterizes the tightest curve along which a vehicle may travel. A comparatively small minimal turning radius usually is associated with a good maneuverability of the vehicle.

### SUMMARY

It is an objective of the present disclosure to allow a vehicle to have a comparatively small minimal turning radius.

The problem is at least partially solved or alleviated by the subject matter of the independent claims of the present disclosure, wherein further examples are incorporated in the dependent claims.

According to a first aspect, there is provided a method for controlling a vehicle having at least a first steerable and driven wheel and a second steerable and driven wheel. The first wheel and the second wheel are associated with the same axle. The method comprises:
- receiving first data and second data, the first data and the second data indicative of different characteristics of a driver input requesting the vehicle to turn,
- comparing the first data to a first threshold and the second data to a second threshold, and
- causing a first torque to be applied to or withdrawn from the first wheel and a second torque to be applied to or withdrawn from the second wheel based on the comparison of the first data to the first threshold and on the comparison of the second data to the second threshold, wherein the first torque and the second torque have different absolute values and/or different orientations.

Thus, the present method is about supporting or enhancing the steering of the vehicle by causing a first torque to be applied to the first wheel and a second torque to be applied to the second wheel. Since the first torque and the second torque have different absolute values and/or different orientations, the application of these torques generates a yaw moment for the vehicle. Consequently, a minimal turning radius of the vehicle may be reduced. Put otherwise, the torque associated with the first wheel and the torque associated with the second wheel are adjusted independently from one another in order to reduce a minimal turning radius of the vehicle. This may be summarized as applying torque vectoring to the first wheel and the second wheel. However, according to the present method, torque vectoring is only applied under two conditions. The first condition relates to a comparison of the first data to the first threshold. The second condition relates to a comparison of the second data to the second threshold. Both the first data and the second data are indicative of a characteristic of a driver input requesting the vehicle to turn. It has to be emphasized that the characteristic of which the first data is indicative and the characteristic of which the second data is indicative are different. Consequently, the present method considers two different characteristics of a driver input requesting the vehicle to turn. This has the effect that a reliability of the present method and especially a reliability of causing a first torque to be applied to the first wheel and a second torque to be applied to the second wheel is enhanced. The same applies in a situation in which a first torque is to be withdrawn from the first wheel and a second torque is to be withdrawn from the second wheel. It is noted that withdrawing a torque implies that a torque has been applied before. Thus, the above-mentioned two conditions are also applied when stopping or ending the application of torque vectoring to the first wheel and to the second wheel. Both when applying a torque and when withdrawing a torque, misinterpretations or detection errors in respect of the driver input requesting the vehicle to turn are excluded or at least significantly reduced. Altogether, an interpretation of the driver input requesting the vehicle to turn is highly reliable. This applies both to starting and ending torque vectoring.

In the context of the present disclosure, causing a first torque to be applied to the first wheel and a second torque to be applied to the second wheel has the effect that a minimal turning radius of the vehicle is reduced. More precisely, the minimal turning radius is reduced as compared to a situation in which neither the first torque nor the second torque is caused to be applied to the first wheel and to the second wheel respectively. This is due to two cumulative effects. The first effect relates to the fact that the torque applied to the first wheel and the torque applied to the second wheel create a yaw moment for the vehicle. The yaw moment has the effect that the vehicle is able to turn as if the first wheel and the second wheel were mechanically rotated by a certain increment using the steering wheel. The second effect relates to the fact that the torque applied to the first wheel and the torque applied to the second wheel effectively allow the first wheel and the second wheel to mechanically rotate by a certain increment since applying the torque allows to move the mechanical components of the steering system. This movement is possible due to play of the mechanical components of the steering system and due to an elastic deformation of the components of the steering system.

It is further noted that in the context of the present disclosure, a torque applied to the first wheel or second wheel which at the same time is an outer wheel in respect of a curve along which the vehicle is to travel, always is positive. This means that the torque is oriented into the same direction as the rotation of the wheel while traveling along the curve. The torque applied to the inner wheel in respect of the curve along which the vehicle is to travel is always smaller than the torque applied to the outer wheel. This covers three alternatives. In a first alternative, the torque applied to the inner wheel is positive in the sense that the torque is oriented into the same direction as the rotation of the wheel while traveling along the curve. In a second alternative, the torque applied to the inner wheel is negative in the sense that the torque is oriented opposite to the direction of rotation of the wheel while the wheel is traveling along the curve. This means that the torque applied to the wheel decelerates the wheel while the wheel still is traveling along the curve. In a third alternative, the rotation of the wheel and the torque are again oriented into the same direction, but the wheel rotates backwards with respect to the curve. The latter alternative allows the vehicle to quasi turn around its own axis.

According to an example, one of the first data and the second data is indicative of a steering wheel angle and the corresponding one of the first threshold and the second threshold is a steering wheel angle threshold. Thus, one of the conditions for applying a torque or withdrawing a torque relates to a comparison of a steering wheel angle and a steering wheel angle threshold. In this context, the steering wheel angle threshold may correspond to an end stop position of a steering wheel of the vehicle. In an example, the condition to apply torque may relate to the fact that the steering wheel angle equals the steering wheel angle threshold. This means that the steering wheel reaches the end stop position. In another example, the condition to withdraw torque may relate to the fact that the steering wheel angle is inferior to the steering wheel angle threshold. This means that the steering wheel is not in the end stop position, e.g. because it has left the end stop position. It is noted again, that a prerequisite for withdrawing a torque is that a torque has been applied. It is further noted that, of course, other conditions can apply. Altogether, the fact that the first data or the second data is indicative of a steering wheel angle and the corresponding first threshold or second threshold is a steering wheel angle threshold allow to reliably characterize a driver input.

According to an example, one of the first data and the second data is indicative of a steering wheel torque and the corresponding one of the first threshold and the second threshold is a steering wheel torque threshold. Thus, one of the conditions for applying a torque or withdrawing a torque relates to a comparison of a steering wheel torque and a steering wheel torque threshold. The steering wheel torque may for example be measured by a torsion bar. In an example, the condition to apply torque may relate to the fact that the steering wheel torque equals or exceeds the steering wheel torque threshold. In another example, the condition to withdraw torque may relate to the fact that the steering wheel torque is inferior to the steering wheel torque threshold. It is noted again, that a prerequisite for withdrawing a torque is that a torque has been applied. It is further noted that, of course, other conditions can apply. Altogether, the fact that the first data or the second data is indicative of a steering wheel torque and the corresponding first threshold or second threshold is a steering wheel torque threshold allows to reliably characterize a driver input.

In another example, the first data is indicative of a steering wheel angle and the second data is indicative of a steering wheel torque. Correspondingly, the first threshold is a steering wheel angle threshold and the second threshold is a steering wheel torque threshold. In this example, a torque may be applied to the first wheel and the second wheel only if the steering wheel angle equals the steering wheel angle threshold and the steering wheel torque equals or exceeds the steering wheel torque threshold. As before, the steering wheel angle threshold may correspond to an end stop position of the steering wheel. In another example, a torque may be withdrawn from the first wheel and the second wheel only if the steering wheel angle is inferior to the steering wheel angle threshold and the steering wheel torque is inferior to the steering wheel torque threshold. Consequently, using these examples, a situation in which a driver has turned the steering wheel into the end stop position and still is applying a steering wheel torque exceeding the steering wheel torque threshold, the torque is applied to the first wheel and to the second wheel. Outside such a situation, the torque is not applied or withdrawn. Consequently, a driver's need of a reduced minimal turning radius may be determined with high reliability and precision. Only in such a case, the torque is applied.

In an example, the method further comprises causing the first torque to be applied to the first wheel and the second torque to be applied to the second wheel if the first data equals or exceeds the first threshold and the second data equals or exceeds the second threshold. In other words, a torque is applied if the corresponding characteristic equals or exceeds the associated threshold. This is comparatively simple and robust. Moreover, such a determination may be executed in a computationally efficient and quick manner.

In an example, the method further comprises causing the first torque to be withdrawn from the first wheel and the second torque to be withdrawn from the second wheel if the first data is inferior to the first threshold and the second data is inferior the second threshold. In other words, a torque is withdrawn if the corresponding characteristic is inferior to the associated threshold. As before, withdrawing a torque implies that a torque has been applied before. This is comparatively simple and robust. Moreover, such a determination may be executed in a computationally efficient and quick manner.

According to an example, the method further comprises determining a time period for which the first data has equaled the first threshold or exceeded the first threshold or been inferior to the first threshold and for which the second data has equaled the second threshold or exceeded the second threshold or been inferior to the second threshold. Moreover, the method may further comprise comparing the time period to a time period threshold, wherein the first torque is caused to be applied or withdrawn and the second torque is caused to be applied or withdrawn only if the time period equals or exceeds the time period threshold. This means that the torque is only caused to be applied or withdrawn if both the comparison of the first data and the first threshold and the comparison of the second data and the second threshold has been stable for at least the time period corresponding to the time period threshold. This means that, depending on the specific application, the first data has equaled the first threshold or exceeded the first threshold or been inferior to the first threshold for at least the time period threshold and the second data has equaled the second threshold or exceeded the second threshold or been inferior to the second threshold for at least the time period threshold. More generally speaking, the torque is only caused to be applied or withdrawn after a certain waiting time. This enhances the precision and appropriateness of applying or withdrawing a torque. Variations of the characteristics of the driver input which are reflected in the first data and the second data but only occur for a comparatively short time period inferior to the time period threshold are ignored.

In an example, causing the first torque to be applied comprises causing the first torque to increase. Alternatively or additionally, causing the second torque to be applied comprises causing the second torque to increase. This means that the first torque and/or the second torque are not applied suddenly or abruptly. Rather, the first torque and/or the second torque are evolving towards a desired torque level. In an example, the first torque and/or the second torque may be increased step-wise or continuously. Causing the first torque to increase and/or the second torque to increase leads to a smooth and predictable driving behavior of the vehicle. Moreover, wear on components of a steering system or, more generally speaking, a chassis of the vehicle is reduced by eliminating abrupt changes of torques.

In an example, causing the first torque to be withdrawn comprises causing the first torque to decrease. Alternatively or additionally, causing the second torque to be withdrawn comprises causing the second torque to decrease. This means that the first torque and/or the second torque are not withdrawn suddenly or abruptly. Rather, the first torque and/or the second torque are evolving towards a desired torque level. In an example, the first torque and/or the second torque may be decreased step-wise or continuously. Causing the first torque to decrease and/or the second torque to decrease leads to a smooth and predictable driving behavior of the vehicle. Moreover, wear on the components of a steering system or, more generally speaking a chassis of the vehicle is reduced by eliminating abrupt changes of torques.

According to an example, the first torque increases along a ramp or decreases along a ramp. Alternatively or additionally, the second torque increases along a ramp or decreases along a ramp. This means that the first torque is applied or withdrawn in a particularly smooth manner. Alternatively or additionally, the second torque is applied or withdrawn in a particularly smooth manner. Consequently, the driving behavior of the vehicle is particularly smooth and predictable.

In an example, the method further comprises causing the first torque to be applied to or withdrawn from the first wheel and the second torque to be applied to or withdrawn from the second wheel based on map data. In this context, any data indicative of a property of a roadway on which the vehicle may travel is to be understood as map data. The map data is especially indicative of a course of the roadway, i.e. of the fact whether the roadway is straight or curved. Additionally or alternatively, the map data may be indicative of a curvature of the roadway, a position, e.g. coordinates, of the roadway, a road banking, and an inclination of the roadway. Based on the map data, a drivable area of the roadway may be determined and a path may be planned and controlled accordingly be the driver. Moreover, the map data is indicative of a position of the vehicle. The map data may as well be designated as navigation data. Consequently, the first torque and/or the second torque may be determined based on a curvature of the roadway. This facilitates smooth traveling of the vehicle along the roadway even though the road way may comprise curves with a comparatively small radius.

In an example, the method further comprises causing the first torque to be applied to or withdrawn from the first wheel and the second torque to be applied to or withdrawn from the second wheel based on sensor data indicative of a surrounding of the vehicle. The sensor data is especially indicative of obstacles in the surroundings of the vehicle. Alternatively or additionally, the sensor data may be indicative of a distance between the vehicle and the obstacle. Thus, the first torque and/or the second torque may be adjusted as a function of obstacles present in the surroundings of the vehicle. Optionally, the sensor data monitors the surroundings of the vehicle. This facilitates circumventing the obstacles, i.e. avoiding a collision of the vehicle with one or more of the obstacles. In this context, the sensor data may be provided by one or more of an ultrasonic sensor, a vision-based sensors like a camera or any other suitable sensor.

In an example, the first torque and/or the second torque is variable over time. This means that the first torque and/or the second torque is not always the same. Thus, it may be chosen based on a current driving situation or any other appropriate parameter. In an example, the first torque and/or the second torque may be limited by a friction estimate. Consequently, the first torque and/or the second torque may be determined while at the same time ensuring that the vehicle is not losing traction. In another example, the first torque and/or the second torque may be limited by the maximum allowable wheel slip. Also in this example, the first torque and/or the second torque may be determined while at the same time ensuring that the vehicle is not losing traction. Altogether, the fact that the first torque and/or the second top is variable over time allows to always choose a first torque and/or second torque which is most appropriate for a current driving situation.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the present disclosure. Thus, using the data processing apparatus steering of the vehicle may be supported or enhanced by causing a first torque to be applied to the first wheel and a second torque to be applied to the second wheel. In doing so, a minimal turning radius of the vehicle may be reduced. This may be summarized as applying torque vectoring to the first wheel and the second wheel. However, using the data processing apparatus according to the present disclosure, torque vectoring is only applied under two conditions. The first condition relates to a comparison of the first data to the first threshold. The second condition relates to a comparison of the second data to the second threshold. Both the first data and the second data are indicative of a characteristic of a driver input requesting the vehicle to turn. It has to be emphasized that the characteristic of which the first data is indicative and the characteristic of which the second data is indicative are different. Consequently, using the present data processing apparatus two different characteristics of a driver input requesting the vehicle to turn are considered. This has the effect that a reliability of causing a first torque to be applied to the first wheel and a second torque to be applied to the second wheel is enhanced. The same applies in a situation in which a first torque is to be withdrawn from the first wheel and a second torque is to be withdrawn from the second wheel. It is noted that withdrawing a torque implies that a torque has been applied before. Thus, the above-mentioned two conditions are also applied when stopping or ending the application of torque vectoring to the first wheel and the second wheel. Both when applying a torque and withdrawing a torque, misinterpretations or detection errors in respect of the driver input requesting the vehicle to turn are excluded or at least significantly reduced. Altogether, an interpretation of the driver input requesting the vehicle to turn is highly reliable. This applies both to starting and ending torque vectoring.

According to a third aspect, there is provided a computer program comprising instructions which, when the computer program is executed by a computer, cause the computer to carry out the method of the present disclosure. Thus, using the computer program steering of the vehicle may be supported or enhanced by causing a first torque to be applied to the first wheel and a second torque to be applied to the second wheel. In doing so, a minimal turning radius of the vehicle may be reduced. This may be summarized as applying torque vectoring to the first wheel and the second wheel. However, using the computer program according to the present disclosure, torque vectoring is only applied under two conditions. The first condition relates to a comparison of the first data to the first threshold. The second condition relates to a comparison of the second data to the second threshold. Both the first data and the second data are indicative of a characteristic of a driver input requesting the vehicle to turn. It has to be emphasized that the characteristic of which the first data is indicative and the characteristic of which the second data is indicative are different. Consequently, using the present computer program two different characteristics of a driver input requesting the vehicle to turn are considered. This has the effect that a reliability of causing a first torque to be applied to the first wheel and a second torque to be applied to the second wheel is enhanced. The same applies in a situation in which a first torque is to be withdrawn from the first wheel and a second torque is to be withdrawn from the second wheel. It is noted that withdrawing a torque implies that a torque has been applied before. Thus, the above-mentioned two conditions are also applied when stopping or ending the application of torque vectoring to the first wheel and the second wheel. Both when applying a torque and withdrawing a torque, misinterpretations or detection errors in respect of the driver input requesting the vehicle to turn are excluded or at least significantly reduced. Altogether, an interpretation of the driver input requesting the vehicle to turn is highly reliable. This applies both to starting and ending torque vectoring.

According to a fourth aspect, there is provided a computer-readable storage medium comprising instructions which, when executed by a computer, cause the computer to carry out the method of the present disclosure. Thus, using the computer-readable storage medium steering of the vehicle may be supported or enhanced by causing a first torque to be applied to the first wheel and a second torque to be applied to the second wheel. In doing so, a minimal turning radius of the vehicle may be reduced. This may be summarized as applying torque vectoring to the first wheel and the second wheel. However, using the computer-readable storage medium according to the present disclosure, torque vectoring is only applied under two conditions. The first condition relates to a comparison of the first data to the first threshold. The second condition relates to a comparison of the second data to the second threshold. Both the first data and the second data are indicative of a characteristic of a driver input requesting the vehicle to turn. It has to be emphasized that the characteristic of which the first data is indicative and the characteristic of which the second data is indicative are different. Consequently, using the present computer-readable storage medium two different characteristics of a driver input requesting the vehicle to turn are considered. This has the effect that a reliability of causing a first torque to be applied to the first wheel and a second torque to be applied to the second wheel is enhanced. The same applies in a situation in which a first torque is to be withdrawn from the first wheel and a second torque is to be withdrawn from the second wheel. It is noted that withdrawing a torque implies that a torque has been applied before. Thus, the above-mentioned two conditions are also applied when stopping or ending the application of torque vectoring to the first wheel and the second wheel. Both when applying a torque and withdrawing a torque, misinterpretations or detection errors in respect of the driver input requesting the vehicle to turn are excluded or at least significantly reduced. Altogether, an interpretation of the driver input requesting the vehicle to turn is highly reliable. This applies both to starting and ending torque vectoring.

It should be noted that the above examples may be combined with each other irrespective of the aspect involved.

These and other aspects of the present disclosure will become apparent from and elucidated with reference to the examples described hereinafter.

### BRIEF DESCRIPTION OF THE DRAWING

Examples of the disclosure will be described in the following with reference to the following drawing.

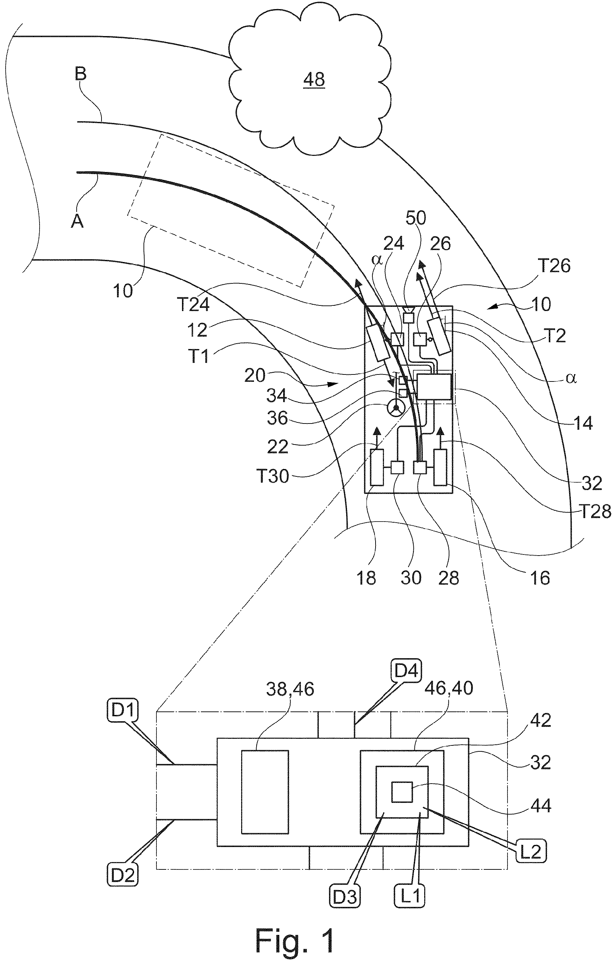

- Figure 1: shows a vehicle travelling along a curved roadway, wherein the vehicle comprises a data processing apparatus according to the present disclosure, a computer program according to the present disclosure and a computer-readable storage medium according to the present disclosure, and wherein the vehicle executes a method for controlling a vehicle according to the present disclosure.

### DETAILED DESCRIPTION

The Figure is a merely schematic representation and serve only to illustrate examples of the disclosure.

Figure 1 shows a vehicle 10. In the present example, the vehicle 10 is a battery electric vehicle (BEV). For reasons of better visibility, the battery is not shown in the Figure.

The vehicle comprises four wheels 12, 14, 16, 18.

The wheels 12, 14 are front axle wheels. These wheels 12, 14 are steerable which means that these wheels 12, 14 are connected to a steering system 20. The steering system 20 also comprises a steering wheel 22 which can be manipulated by a human driver of the vehicle 10 in order to control the steerable wheels 12, 14.

The wheels 16, 18 are rear axle wheels. These wheels 16, 18 are non-steerable.

In the present example, the vehicle 10 is a four-wheel drive vehicle. This means that all four wheels 12, 14, 16, 18 are driven wheels.

Moreover, the vehicle 10 comprises a total of four electric drive machines 24, 26, 28, 30.

Each of the four electric drive machines 24, 26, 28, 30 is drivingly coupled to one of the four wheels 12, 14, 16, 18. More precisely, the electric drive machine 24 is drivingly coupled to the wheel 12, electric drive machine 26 is drivingly coupled to wheel 14, electric drive machine 28 is driving the coupled to wheel 16 and electric drive machine 30 is drivingly coupled to wheel 18.

The vehicle 10 additionally comprises a data processing apparatus 32. The data processing apparatus 32 is communicatively connected to each of the electric drive machines 24, 26, 28, 30.

Moreover, the data processing apparatus 32 is communicatively coupled to a first sensor 34 configured to detect a steering wheel angle of the steering wheel 22 and to a second sensor 36 configured to detect a steering wheel torque applied on the steering wheel 22.

The data processing apparatus 32 comprises a data processing unit 38 and a data storage unit 40.

The data storage unit 40 comprises a computer-readable storage medium 42.

On the computer-readable storage medium 42, there is provided a computer program 44.

The computer program 44 and, thus, also the computer-readable storage medium 42 comprises instructions which, when the computer program 44 is executed by the data processing unit 38 or, more generally speaking, a computer, cause the data processing unit 38 or the computer to carry out a method for controlling a vehicle.

Consequently, the data processing unit 38 and the data storage unit 40 form means 46 for carrying out the method for controlling the vehicle 10.

In the following, the method for controlling the vehicle 10 will be explained in more detail. In this context, the wheel 12 may as well be called a first steerable and driven wheel and the wheel 14 may as well be called a second steerable and driven wheel.

For the ease of explanation, it is assumed that the wheels 12, 14 have been inclined by a road wheel angle α by operating the steering wheel 22. The road wheel angle α corresponds to an end stop position of the steering wheel 22. In simplified words, it is not possible to further turn the steering wheel 22 to the left. Moreover, it is assumed, that the driver of the vehicle 10 is able to see an obstacle 48 on the roadway. The driver wishes to drive around the obstacle 48. For this reason, the driver is a applying a steering wheel torque to the steering wheel 22.

Since the vehicle is a four-wheel drive, wheel 12 is driven by a torque T24 provided by the electric drive machine 24, wheel 14 is driven by a torque T26 provided by the electric drive machine 26, wheel 16 is driven by a torque T28 provided by the electric drive machine 28 and wheel 18 is driven by a torque T30 provided by the electric drive machine 30.

In a first step S1 of the method, first data D1 is received. The first data D1 is indicative of a characteristic of a driver input requesting the vehicle 10 to turn. In other words, the first data D1 characterizes the operation of the steering wheel 22 as executed by the driver.

In the present example, the first data D1 is indicative of a steering wheel angle. Consequently, the first data D1 is provided by the first sensor 34.

Further, also in the first step S1, second data D2 is received. The second data D2 is also indicative of a characteristic of the driver input requesting the vehicle 10 to turn. Thus, also the second data D2 characterizes the operation of the steering wheel 22 as executed by the driver. However, the second data D2 relates to a different characteristic as compared to the first data D 1.

In the present example, the second data D2 is indicative of a steering wheel torque. Consequently, the second data D2 is provided by the second sensor 36.

In a second step S2 of the method, the first data D1 is compared to a first threshold L1 and the second data D2 is compared to a second threshold L2. In the present example, the first threshold L1 is a steering wheel angle threshold and the second threshold L2 is a steering wheel torque threshold.

In other words, in the second step S2 of the method, it is determined whether the steering wheel angle of which the first data D1 is indicative is inferior, equals or exceeds the steering wheel angle threshold. Moreover, in the second step S2 of the method, it is determined whether the steering wheel torque of which the second data D2 is indicative is inferior, equals or exceeds the steering wheel torque threshold.

In a subsequent third step S3, a first torque T1 is caused to be applied to the wheel 12 and the second torque T2 is caused to be applied to the wheel 14 under a number of conditions. It is noted that with respect to the curve along which the vehicle 10 is traveling, the wheel 12 is an inner wheel and the wheel 14 is in outer wheel.

A first condition relates to the steering wheel angle. It is assumed that in the present example, the steering wheel angle threshold corresponds to the end stop position of the steering wheel 22. Thus, as has been explained above, the steering wheel angle corresponds or equals the steering wheel angle threshold. The first condition for applying a torque T1, T2 is that the steering wheel angle equals the steering wheel angle threshold.

A second condition relates to the steering wheel torque. In the present example, the steering wheel torque applied by the driver is assumed to exceed the steering wheel torque threshold. The second condition for applying a torque T1, T2 is that the steering wheel torque exceeds the steering wheel torque threshold.

Beyond that, the third step S3 comprises determining a time period for which the steering wheel angle of which the first data D1 is indicative has equaled the steering wheel angle threshold and for which, additionally, the steering wheel torque of which the second data D2 is indicative has exceeded the steering wheel torque threshold.

This time period is compared to a time period threshold.

According to a third condition, a torque T1, T2 is applied if the time period equals or exceeds the time period threshold.

In the present example, it is assumed that all three conditions are met. Consequently, a first torque T1 is caused to be applied to the wheel 12 and a second torque T2 is caused to be applied to the wheel 14.

In simplified words, this means that torque vectoring is applied to the wheels 12, 14 in order to support the steering system 20. This means that the first torque T1 and the second torque T2 a provided in addition to the torques T24, T26 by the electric drive machine 24 and the electric drive machine 26 respectively. In other words, the first torque T1 and the second torque T2 overlay the torques T24, T26.

Since in the present example, the wheel 14 is an outer wheel, the second torque T2 is oriented into the same direction as the torque T26 which corresponds to a direction of rotation of the wheel 14. In simplified words, the torque provided at the wheel 14 is increased as compared to the torque T26.

The wheel 12 is an inner wheel. Consequently, the first torque T1 is oriented opposite to the torque T24 and opposite to a direction of rotation of the vehicle 12. In simplified words, the first torque T1 decelerates the wheel 12.

Altogether, the first torque T1 and the second torque T2 have different orientations.

For the ease of explanation, it is assumed that the first torque T1 and the second torque T2 have the same absolute value. However, it is understood that this value may as well be different in other examples.

In the context of the third step S3, causing the first torque T1 and the second torque T2 to be applied means that the first torque T1 and the second torque T2 continuously evolve from 0 to their respective end value. For example, the first torque evolves from 0 to -100 Nm and the second torque evolves from 0 to +100Nm.

In other words, causing the first torque T1 to be applied means causing the first torque T1 to increase. Likewise, causing the second torque T2 to be applied means causing the second torque T2 to increase. Both torques T1, T2 increase continuously along a ramp.

In the present example, the end values of the first torque T1 and the second torque T2 are provided by a lookup table which is stored on the computer-readable storage medium. This means that in principle, the end values of the first torque and the second torque are not fixed, but may be adapted depending on the situation.

In the present example, map data D3 is provided on the data storage unit 40. The map data D3 is indicative of a roadway network and geometric properties of the roadway.

Moreover, the vehicle 10 comprises a third sensor 50 which is configured to provide sensor data D4 indicative of a surrounding of the vehicle 10. In the present example, the third sensor 50 may be an optical camera unit. The optical camera unit may be configured to detect the obstacle 48.

Both the map data D3 and the sensor data D4 provided by the third sensor 50 describe a driving situation.

Consequently, using the lookup table, the end values of the first torque T1 and of the second torque T2 may be chosen such that the yaw moment or steering provided by the first torque T1 and the second torque T2 helps to drive around the obstacle 48 using trajectory A instead of trajectory B which the vehicle 10 would have taken without applying the first torque T1 and the second torque T2.

It is noted that the method for controlling the vehicle 10 may be executed periodically. Consequently, in the present example, the method is executed once more in a situation in which the vehicle 10 is located at a different position further down the roadway. This position is indicated by dashed lines.

In this position, the obstacle 48 is located on a right lateral side of the vehicle 10. Consequently, a risk of collision between the vehicle 10 and the obstacle 48 is comparatively low.

It is assumed that in this situation, the driver reduces the torque he or she is applying on the steering wheel 22 such that the steering wheel torque is inferior to the steering wheel torque threshold. Furthermore, it is assumed that the driver turns the steering wheel 22 in a direction away from its end stop position towards its middle position.

At this location, the method for controlling the vehicle 10 is executed again.

As before, a first step S1 comprises receiving first data D1 and second data D2. In this respect, reference may be made to the above explanations.

In a second step S2, the first data D1 is compared to the first threshold L1 and the second data D2 is compared to the second threshold L2 as before.

The third step S3 is different than the third step S3 as explained in connection with the previous execution of the method. The third step now is about withdrawing the first torque T1 and the second torque T2. It is understood that the first torque T1 can only be withdrawn if it has been applied before and the second torque T2 can only be withdrawn if it has been applied before.

Again, three conditions need to be met.

A first condition relates to the steering wheel angle. The first condition for withdrawing a torque T1, T2 is that the steering wheel angle is inferior to the steering wheel angle threshold.

A second condition relates to the steering wheel torque. The second condition for withdrawing a torque T1, T2 is that the steering wheel torque is inferior to the steering wheel torque threshold.

Beyond that, the third step S3 also comprises determining a time period for which the steering wheel angle of which the first data D1 is indicative is inferior to the steering wheel angle threshold and for which, additionally, the steering wheel torque of which the second data D2 is indicative is inferior to the steering wheel torque threshold.

This time period is compared to a time period threshold.

According to a third condition, a torque T1, T2 is withdrawn if the time period equals or exceeds the time period threshold.

In the present example, it is assumed that all three conditions are met. Consequently, the first torque T1 is caused to be withdrawn from the wheel 12 and the second torque T2 is caused to be withdrawn from the wheel 14.

In simplified words, this means that the application of torque vectoring is ended. This means that the first torque T 1 and the second torque T2 are withdrawn.

In the context of the third step S3, causing the first torque T1 and the second torque T2 to be withdrawn means that the first torque T1 and the second torque T2 continuously evolve from their current values to zero. For example, the first torque T1 evolves from -100 Nm to zero and the second torque T2 evolves from +100Nm to zero.

In other words, causing the first torque T1 to be withdrawn means causing the first torque T1 to decrease. Likewise, causing the second torque T2 to be withdrawn means causing the second torque T2 to decrease. Both torques T1, T2 decrease continuously along a ramp.

After the first torque T1 and the second torque T2 have been withdrawn completely, the vehicle 10 continues driving using the torques T24, T26, T28, T30 as has been explained before. This also means that a radius of curvature of the trajectory A increases.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: wheel
- 14: wheel
- 16: wheel
- 18: wheel
- 20: steering system
- 22: steering wheel
- 24: electric drive machine
- 26: electric drive machine
- 28: electric drive machine
- 30: electric drive machine
- 32: data processing apparatus
- 34: first sensor
- 36: second sensor
- 38: data processing unit
- 40: data storage unit
- 42: computer-readable storage medium
- 44: computer program
- 46: means for carrying out a method for controlling a vehicle
- 48: obstacle
- 50: third sensor

- α: road wheel angle
- A: trajectory of the vehicle
- B: trajectory of the vehicle
- D1: first data
- D2: second data
- D3: map data
- D4: sensor data
- L1: first threshold
- L2: second threshold
- S1: first step
- S2: second step
- S3: third step
- T1: first torque
- T2: second torque
- T24: torque provided by electric drive machine 24
- T26: torque provided by electric drive machine 26
- T28: torque provided by electric drive machine 28
- T30: torque provided by electric drive machine 30

## Claims

1. A method for controlling a vehicle (10) having at least a first steerable and driven wheel (12) and a second steerable and driven wheel (14), the first wheel (12) and the second wheel (14) associated with the same axle, the method comprising:
- receiving first data (D1) and second data (D2), the first data (D1) and the second data (D2) indicative of different characteristics of a driver input requesting the vehicle (10) to turn,
- comparing the first data (D1) to a first threshold (L1) and the second data (D2) to a second threshold (L2), and
- causing a first torque (T1) to be applied to or withdrawn from the first wheel (12) and a second torque (T2) to be applied to or withdrawn from the second wheel (14) based on the comparison of the first data (D1) to the first threshold (L1) and on the comparison of the second data (D2) to the second threshold (L2), wherein the first torque (T1) and the second torque (T2) have different absolute values and/or different orientations.

2. The method of claim 1, wherein one of the first data (D1) and the second data (D2) is indicative of a steering wheel angle and the corresponding one of the first threshold (L1) and the second threshold (L2) is a steering wheel angle threshold.

3. The method of claim 1 or 2, wherein one of the first data (D1) and the second data (D2) is indicative of a steering wheel torque and the corresponding one of the first threshold (L1) and the second threshold (L2) is a steering wheel torque threshold.

4. The method of any one of the preceding claims, further comprising causing the first torque (T1) to be applied to the first wheel (12) and the second torque (T2) to be applied to the second wheel (14) if the first data (D1) equals or exceeds the first threshold (L1) and the second data (D2) equals or exceeds the second threshold (L2).

5. The method of any one of the preceding claims, further comprising causing the first torque (T1) to be withdrawn from the first wheel (12) and the second torque (T2) to be withdrawn from the second wheel (14) if the first data (D1) is inferior to the first threshold (L1) and the second data (D2) is inferior the second threshold (L2).

6. The method of any one of the preceding claims, further comprising determining a time period for which the first data (D1) has equaled the first threshold (L1) or exceeded the first threshold (L1) or been inferior to the first threshold (L1) and for which the second data (D2) has equaled the second threshold (L2) or exceeded the second threshold (L2) or been inferior to the second threshold (L2), and comparing the time period to a time period threshold, wherein the first torque (T1) is caused to be applied or withdrawn and the second torque (T2) is caused to be applied or withdrawn only if the time period equals or exceeds the time period threshold.

7. The method of any one of the preceding claims, wherein causing the first torque (T1) to be applied comprises causing the first torque (T1) to increase and/or wherein causing the second torque (T2) to be applied comprises causing the second torque (T2) to increase.

8. The method of any one of the preceding claims, wherein causing the first torque (T1) to be withdrawn comprises causing the first torque (T1) to decrease and/or wherein causing the second torque (T2) to be withdrawn comprises causing the second torque (T2) to decrease.

9. The method of claim 7 or 8, wherein the first torque (T1) increases along a ramp or decreases along a ramp and/or wherein the second torque (T2) increases along a ramp or decreases along a ramp.

10. The method of any one of the preceding claims, further comprising causing the first torque (T1) to be applied to or withdrawn from the first wheel (12) and the second torque (12) to be applied to or withdrawn from the second wheel (14) based on map data (D3).

11. The method of any one of the preceding claims, further comprising causing the first torque (T1) to be applied to or withdrawn from the first wheel (12) and the second torque (T2) to be applied to or withdrawn from the second wheel (14) based on sensor data (D4) indicative of a surrounding of the vehicle (10).

12. The method of any one of the preceding claims, wherein the first torque (T1) and/or the second torque (T2) is variable over time.

13. A data processing apparatus (32) comprising means (46) for carrying out the method of any one of the preceding claims.

14. A computer program (44) comprising instructions which, when the computer program (44) is executed by a computer, cause the computer to carry out the method of claims 1 to 12.

15. A computer-readable storage medium (42) comprising instructions which, when executed by a computer, cause the computer to carry out the method of claims 1 to 12.

## Amended claims

### Amended claims in accordance with Rule 137(2) EPC.

1. A method for controlling a vehicle (10) having at least a first steerable and driven wheel (12) and a second steerable and driven wheel (14), the first wheel (12) and the second wheel (14) associated with the same axle, the method comprising:
- receiving first data (D1) and second data (D2), the first data (D1) and the second data (D2) indicative of different characteristics of a driver input requesting the vehicle (10) to turn,
- comparing the first data (D1) to a first threshold (L1) and the second data (D2) to a second threshold (L2),
- causing a first torque (T1) to be applied to or withdrawn from the first wheel (12) and a second torque (T2) to be applied to or withdrawn from the second wheel (14) based on the comparison of the first data (D1) to the first threshold (L1) and on the comparison of the second data (D2) to the second threshold (L2), wherein the first torque (T1) and the second torque (T2) have different absolute values and/or different orientations, wherein causing the first torque (T1) to be applied to or withdrawn from the first wheel (12) and the second torque (12) to be applied to or withdrawn from the second wheel (14) is based on map data (D3), wherein the map data (D3) is indicative of a property of a roadway on which the vehicle (10) may travel.

2. The method of claim 1, wherein one of the first data (D1) and the second data (D2) is indicative of a steering wheel angle and the corresponding one of the first threshold (L1) and the second threshold (L2) is a steering wheel angle threshold.

3. The method of claim 1 or 2, wherein one of the first data (D 1) and the second data (D2) is indicative of a steering wheel torque and the corresponding one of the first threshold (L1) and the second threshold (L2) is a steering wheel torque threshold.

4. The method of any one of the preceding claims, further comprising causing the first torque (T1) to be applied to the first wheel (12) and the second torque (T2) to be applied to the second wheel (14) if the first data (D1) equals or exceeds the first threshold (L1) and the second data (D2) equals or exceeds the second threshold (L2).

5. The method of any one of the preceding claims, further comprising causing the first torque (T1) to be withdrawn from the first wheel (12) and the second torque (T2) to be withdrawn from the second wheel (14) if the first data (D1) is inferior to the first threshold (L1) and the second data (D2) is inferior the second threshold (L2).

6. The method of any one of the preceding claims, further comprising determining a time period for which the first data (D1) has equaled the first threshold (L1) or exceeded the first threshold (L1) or been inferior to the first threshold (L1) and for which the second data (D2) has equaled the second threshold (L2) or exceeded the second threshold (L2) or been inferior to the second threshold (L2), and comparing the time period to a time period threshold, wherein the first torque (T1) is caused to be applied or withdrawn and the second torque (T2) is caused to be applied or withdrawn only if the time period equals or exceeds the time period threshold.

7. The method of any one of the preceding claims, wherein causing the first torque (T1) to be applied comprises causing the first torque (T1) to increase and/or wherein causing the second torque (T2) to be applied comprises causing the second torque (T2) to increase.

8. The method of any one of the preceding claims, wherein causing the first torque (T1) to be withdrawn comprises causing the first torque (T1) to decrease and/or wherein causing the second torque (T2) to be withdrawn comprises causing the second torque (T2) to decrease.

9. The method of claim 7 or 8, wherein the first torque (T1) increases along a ramp or decreases along a ramp and/or wherein the second torque (T2) increases along a ramp or decreases along a ramp.

10. The method of any one of the preceding claims, further comprising causing the first torque (T1) to be applied to or withdrawn from the first wheel (12) and the second torque (T2) to be applied to or withdrawn from the second wheel (14) based on sensor data (D4) indicative of a surrounding of the vehicle (10).

11. The method of any one of the preceding claims, wherein the first torque (T1) and/or the second torque (T2) is variable over time.

12. A data processing apparatus (32) comprising means (46) for carrying out the method of any one of the preceding claims.

13. A computer program (44) comprising instructions which, when the computer program (44) is executed by a computer, cause the computer to carry out the method of claims 1 to 11.

14. A computer-readable storage medium (42) comprising instructions which, when executed by a computer, cause the computer to carry out the method of claims 1 to 11.
